# EUROPÄISCHE PATENTSCHRIFT

(11) **EP 0 961 762 B1**
(45) Veröffentlichungstag und Bekanntmachung des Hinweises auf die Patenterteilung: **29.09.2004**
(21) Anmeldenummer: 98910688.5
(22) Anmeldetag: 17.02.1998
(51) Int. Cl.: C05F 9/00, B09B 3/00

(54) **ABFALLBEHANDLUNGSVERFAHREN**
REFUSE-TREATMENT METHOD
PROCEDE DE TRAITEMENT DE DECHETS

(30) Priorität: 24.02.1997 EP 97810096
(43) Veröffentlichungstag der Anmeldung: 08.12.1999
(73) Patentinhaber: Linde AG, 65189 Wiesbaden (DE)
(72) Erfinder: RINDELAUB, Frank, CH-2014 Bole (CH)
(74) Vertreter: AMMANN INGENIEURS-CONSEILS EN PROPRIETE INTELLECTUELLE SA BERNE
(86) Internationale Anmeldenummer: PCT/EP1998/000888
(87) Internationale Veröffentlichungsnummer: WO 1998/038145

(56) Entgegenhaltungen:
- EP-A- 0 228 724
- EP-A- 0 359 250
- CH-A- 685 981
- DE-A- 3 835 230
- DE-A- 3 916 866
- DE-A- 4 222 128
- FR-A- 2 689 790
- GB-A- 2 208 645
- GB-A- 2 230 004
- NL-A- 9 302 124

## Beschreibung

Die vorliegende Erfindung betrifft ein Verfahren gemäss Oberbegriff des Anspruchs 1. Im weiteren betrifft die Erfindung auch eine Anlage zur Durchführung des Verfahrens und daraus resultierende Produkte.

Siedlungsabfall besteht im wesentlichen aus Wasser und der sogenannten gesamten Trockensubstanz (GTS). In der GTS befindet sich wiederum ein wesentlicher Anteil sogenannter organischer Trockensubstanz (OTS), wovon wiederum ein grosser Teil biologisch abbaubar ist (OTS_{biol}).

Für die Entsorgung von Siedlungsabfall besteht die generelle Forderung, möglichst wenig Masse einer Endentsorgung (Deponie) zuführen zu müssen. Relevante Gesetzgebung sieht zusätzlich vor, insbesondere den Anteil an OTS für Deponieabfall zu begrenzen. Hierzu wird versucht, wiederverwertbares Material aus dem Siedlungsabfall abzutrennen. Die Verringerung der OTS wird in bekannten Verfahren durch eine Kompostierung unter aeroben Bedingungen erreicht. Die bei der Kompostierung auftretende Wärme wird dabei zur Trocknung des Materials verwendet. Durch geeignete Vorbereitung des Kompostmaterials (z. B. Trocknen) und Einstellung optimaler Parameter der Kompostierung (z. B. Temperatur) kann eine Eintrocknung bis auf 15 Gew.-% Restwasser oder umgekehrt 85 % Trockensubstanz (TS) im resultierenden Endprodukt erreicht werden. Prozentangaben sind im Rahmen der Beschreibung, soweit nichts anderes angegeben, als Gewichtsprozente zu verstehen.

In bekannten Anlagen wird der Kompostierung ein Fermentierungsschritt, d. h. eine anaerobe Vergärung vorgeschaltet, um Biogas zu erzeugen. Das Biogas wird in der Regel in einem der Anlage angeschlossenen Heizkraftwerk am Ort verbrannt. Die dabei gewonnene, in der Regel thermische und elektrische Energie wird für interne Zwecke verwendet und anderweitig verwertet.

Bekannt sind Anlagen, z.B. gemäss EP-A-359 250, in denen Hausmüll in einer Hochdruckpresse in eine biologisch abbaubare, feuchte Fraktion und eine trockene Fraktion getrennt werden. Die trockene Fraktion wird nochmals einer Trennung, z.B. in einem Rotationssieb, unterworfen, um eine Trennung insbesondere in verbrennbare (Papier, Textilien) und unverbrennbare (Steine, Erde, Glas) Komponenten zu erreichen. Der verbrennbare Anteil wird verkleinert und brikettiert, um ein lagerfähiges Brennmaterial zu erhalten.

Problematisch bei der Trennung der festen Anteile ist jedoch der Anteil mit relativ geringer Teilchengrösse, z.B. bis 40 mm.

Die abbaubare Fraktion wird einer Vergärung zugeführt. Das entstehende Biogas wird aufgefangen und kann als Brennstoff dienen. Der Gärrückstand wird gesiebt und die leichteren Bestandteile werden der trockenen Fraktion zugeführt, die durch das Hochdruckpressen erhalten wird.

Vergärung von abbaubaren Anteilen von Müll ist auch aus der CH-A-685 981, DE-A-3 835 230 und GB-A-2 208 645 bekannt, wobei jeweils die Verwendung des entstehenden Biogases als Brennstoff erwähnt ist.

GB-A-2 230 004 beschreibt ein Abfallbehandlungsverfahren, in dem eine Vergärung des festen Abfalls und separat eine Vergärung eines flüssigen Anteils durchgeführt wird, wodurch ein höherer Vergärungsgrad erreicht wird. Die vergorene Flüssigkeit enthält anaerobe Bakterien und wird zur Vergärung den festen Bestandteilen zugesetzt. Beide Vergärungen erfolgen in Türmen, wobei jeweils noch eine Temperierung durch Anwärmen erfolgt. Die Festkörper-Vergärung erfolgt nicht kontinuierlich.

Die Veröffentlichungen EP-A-0 228 724 und FR-A-2 689 790 befassen sich mit Trennverfahren, in denen vom Boden eines Bassins Festkörper, die sich dort abgesetzt haben, mittels einer Fördervorrichtung angehoben werden. Gemäss FR-A-2 689 790 wird dabei eine Trennung nach spezifischer Masse von relativ grossen Bestandteilen (Grösse ≥ 50 mm) durchgeführt. Eine Wasserzuführ in die Steigleitung vom Boden des Absetzbeckens, die die Fördereinrichtung enthält, dient dazu, nach unten gerissene, leichte Teilchen von der Steigleitung fernzuhalten und eine zusätzliche, nach oben gerichtete Strömung im Absetzbecken herzustellen, um spezifisch leichte Partikel aufsteigen zu lassen.

Das Trennverfahren wird auf Material angewendet, das bereits einer Kompostierung oder einem anderen biologischen Abbauprozess unterworfen wurde.

EP-A-0 228 724 beschreibt eine Vorrichtung mit einem Absetzbecken, in dem ein Fördermittel, z.B. eine Förderspirale, angeordnet ist, um abgesetztes Material vom Grund zur Oberfläche zu befördern. Unter der Förderspirale und am oberen Ende über der Spirale sind Düsen angeordnet, aus denen Wasser auf das geförderte Material gesprüht wird. Die Düsen am oberen Ende werden dabei mit Frischwasser versorgt, um die gewünschte Reinigungswirkung zu erzielen.

Eine Angabe über die Grösse der mit dem Fördermittel geförderten Teile wird nicht gemacht. Bestandteile wie Sand, Glas, also von kleiner Partikelgrösse, werden jedoch in einem separaten Absetzbecken gesammelt und abgeführt.

Eine Aufgabe der vorliegenden Erfindung besteht nun darin, ein Verfahren auszugeben, mit dem es möglich ist, den relativ feinkörnigen Anteil von Müll in organischen und anorganischen Anteil mit einem verringertem Verbrauch an Frischwasser zu trennen.

Eine weitere Aufgabe der vorliegenden Erfindung besteht darin, eine weitere Verringerung der Menge der Endprodukte einer Abfallbehandlungsanlage zu erzielen, die einer kostenträchtigen Endentsorgung zugeführt werden müssen. Eine andere Aufgabe der vorliegenden Erfindung besteht in einer Erhöhung des Trockensubstanzanteils in den Endprodukten, die der Endentsorgung zugeführt werden müssen. Eine Aufgabe besteht auch in der Vergrösserung des Anteils an und/oder der Schaffung von Produkten aus der Abfallbehandlung, die unproblematisch entsorgbar und/oder wiederverwertbar sind.

Mindestens die erste der oben genannten Aufgaben wird durch das Verfahren gemäss Anspruch 1 gelöst. Die weiteren Ansprüche nennen bevorzugte Ausführungsformen des Verfahrens, eine Anlage zur Durchführung des Verfahrens und neuartige, damit erzeugte Produkte.

Demgemäss wird der Siedlungsabfall nach üblichen Vorbereitungsschritten wie z. B. Zerkleinern, Metallabtrennung, Sieben usw. einem Fermenter zugeführt. Die Betriebsparameter des Fermenters werden so gewählt, dass die Vergärung im Fermenter bis zum Ersterben jeglicher Vergärungsaktivität im Gärrückstand geführt (erschöpfende Vergärung) und damit ein maximaler Abbau der OTS_{biol} erreicht wird.

Auf den Gärrückstand können weitere, an sich bekannte Behandlungsverfahren angewandt werden, z. B. eine Separierung unter Druck, um eine Trennung in eine Festfraktion und eine Flüssigfraktion zu bewirken.

Schliesslich wird, bevorzugt zusammen mit anderen, vorher abgetrennten Müllanteilen, der Gärrückstand einer Trocknung bis auf mindestens 90 % TS unterworfen. Die hierfür benötigte Energie wird bevorzugt aus der Verbrennung des Biogases, das beim Vergären anfällt, gewonnen. In der Regel wird so viel Biogas erzeugt, dass der thermische Anteil bei der Elektrizitätserzeugung in einem Wärmekraftwerk, z. B. ein Blockheizkraftwerk, durch Verbrennen des Biogases genügt.

Die feinteilige Müllfraktion, die bei der Siebung vor der Vergärungsstufe abgetrennt wird, wird einer Waschstufe zugeführt. Diese Waschstufe besteht aus einem Absetzbecken mit einer Fördereinrichtung, insbesondere eine Förderspirale, die das am Boden des Beckens abgesetzte Material nach oben fördert, wobei ein Gegenstrom von Waschwasser dafür sorgt, dass die anhaftenden, organischen Bestandteile von den Teilchen entfernt werden. Das benötigte Waschwasser wird durch Trocknung bzw. Eindicken von Komponenten des Gärrückstandes gewonnen.

Die Erfindung soll weiter an Beispielen unter Bezugnahme auf Figuren erläutert werden.
- Figur 1: ein Ablaufschema eines Verfahrens mit Verfahrensschnitten gemäss Erfindung;
- Figur 2: ein Ablaufschema einer bevorzugten erfindungsgemässen Ausführungsform; und
- Figur 3: zeigt ein Schema der Wascheinheit in Fig. 2 für die Feinfraktion des Mülls.

In der Regel weist Siedlungsmüll in etwa einen Anteil von 60 % GTS auf, der Rest (40 %) ist Wasser. Wie bereits gesagt, sind Prozentangaben in der gesamten Beschreibung und den Ansprüchen ohne weitere Angabe als Gewichtsprozente zu verstehen.

Die GTS besteht zu etwa 60 % aus OTS und 40 % MTS (mineralische Trockensubstanzen wie z. B. Glas, Sand, Steine, Metalle). Die OTS teilt sich wiederum in ca. 60 % OTS_{biol} (z. B. Küchenabfälle, Pflanzenteile) und 40 % sonstige organische Bestandteile (z. B. Holz, Plastik) auf. Diese Angaben können natürlich je nach Herkunft des Siedlungsabfalls in weiten Grenzen schwanken und sind nur als Richtwerte zu verstehen.

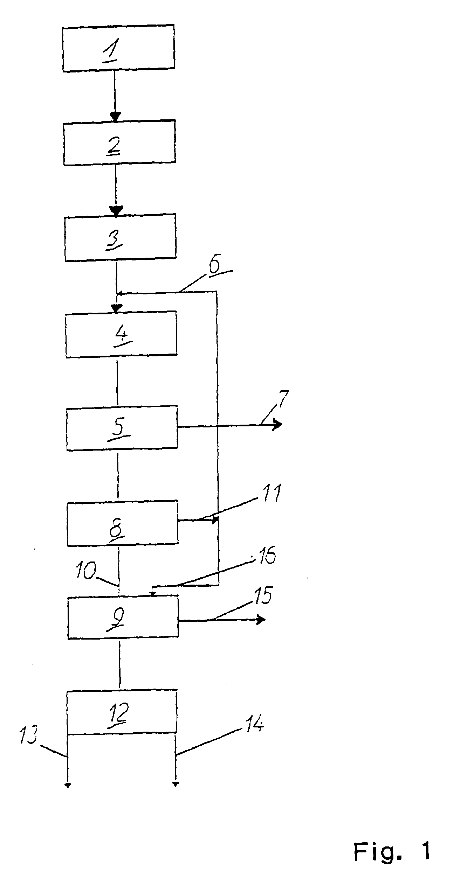

Der Siedlungsmüll wird zunächst in der Anlieferungsstufe 1 (Figur 1) entgegengenommen und gelagert. Er wird anschliessend einer Zerkleinerung 2 unterworfen, Eisen (magnetische Metalle) und gegebenenfalls NE-Metalle werden abgetrennt 3 und eine Feinkalibrierung 4 durchgeführt. Diese Verfahrensschritte und die dafür nötigen Einrichtungen sind an sich bekannt und dienen dazu, ein in einem Fermenter 5 anaerob vergärbares Material zu erzeugen. In der Regel ist es dazu noch nötig, Wasser 6 zuzusetzen.

Erfindungsgemäss muss die Fermentierung 4 bis zur Erschöpfung geführt werden. Mit anderen Worten ist das Ausgangsprodukt des Fermenters 4 so beschaffen, dass es nicht mehr weiter anaerob vergärbar ist. Für eine derartige erschöpfende Vergärung sind Fermenter geeignet, die eine Durchmischung von stärker vergärtem mit weniger stark vergärtem Material, insbesondere eine Vermischung des frisch zugeführten, unvergärten Materials mit in hohem Masse vergärtem Material vermeiden. Derartige Fermenter sind z. B. aus dem Patent US-5,521,092 des Anmelders bekannt. Diese Fermenter weisen zwar Mischelemente auf, diese bewirken jedoch nur eine lokale, vertikale Vermischung und wirken insbesondere Sedimentationseffekten entgegen. Das Gärgut im Fermenter 4 bewegt sich jedoch im sogenannten Pfropfenstrom im Fermenter 4 vom Eingang zum Ausgang fort, d. h. vom Eingang zum Ausgang nimmt der Vergärungsgrad kontinuierlich zu. Mit solchen Fermentern kann ein Abbau von 70 % der OTS_{biol} und mehr erreicht werden. Geht man von einer Tonne Siedlungsmüll oben genannter Zusammensetzung aus und einem Äquivalent von 0,83 m³ Biogas/(kg zersetzte OTS_{biol}), so resultieren daraus 125 m³ Biogas. Bei einem Energieäquivalent von 6 kW/m³ entspricht dies einem Potential von 750 kW Primärenergie.

Der Gärrückstand wird einer Separation 8 in eine Flüssigfraktion und eine Festfraktion unterworfen. Die Festfraktion 10 wird der Trockenstufe 9 zugeführt. Auch die Flüssigfraktion 11 wird der Trockenstufe zugeführt und dort z. B. auf die Trockenfraktion aufgerieselt.

Eine direkte Trocknung des Gärrückstandes verbietet sich in der Regel deshalb, weil der Gärrückstand eine relativ kompakte, luftundurchlässige Masse darstellt. Die Festfraktion 10 dagegen ist eher bröselig und gut - luftdurchlässig. Die Trocknung 9 kann daher im einfachsten Fall mittels Durchblasen warmer Luft durch die Festfraktion erfolgen, wobei auch die aufgerieselte Flüssigfraktion aufgenommen wird. Die dabei entstehende, mit Wasserdampf beladene Abluft 15 kann über übliche Biofilter in die Umwelt abgelassen werden. Für die Trocknung 9 können die bekannten Trocknungsvorrichtungen eingesetzt werden, wie z. B. Festbettofen oder Trommelofen. Es können jedoch auch die bekannten Kompostiermodule für diesen Zweck modifiziert werden: Die Module werden mit geeigneten Heizelementen oder Zufuhr von Warmluft und gegebenenfalls Isolierung ausgestattet. Anstelle des Kompostiermaterials wird die Festfraktion 10 dem modifizierten Kompostiermodul zugeführt. Durch Erwärmen, insbesondere durch Durchblasen von warmer Luft durch die Festfraktion wird die Trocknung bewirkt, wobei auch die aufgerieselte Flüssigfraktion 16 als Dampf in die Heizluft übergeht. Derartige Kompostiermodule sind z. B. aus den Patentveröffentlichungen EP-A-592 368 bzw. dem Patent US-5,434,080 bekannt. Die Trocknung wird bis zu einem Trockensubstanzanteil (TS) von 90 % oder höher geführt.

An die Trocknung schliesst sich noch eine Feinsiebung 12 an. Der feinkörnige Anteil 13, je nach Bedarf mit einer Kornobergrenze von 2 bis 10 mm, kann je nach Material einer industriellen Wiederverwertung zugeführt werden. Die grobkörnigen Bestandteile 14 sind einer Endentsorgung, z. B. einer thermischen Verwertung, zuzuführen oder zu deponieren. Von besonderem Vorteil dabei ist, dass das aus der Trockenstufe 9 hervorgehende Material so trocken und so arm an biologisch abbaubarer organischer Trockensubstanz ist, dass bei trockener Lagerung keine weiteren Zersetzungsprozesse ablaufen. Dieses Produkt ist also problemlos auch über längere Zeit zwischenlagerbar.

Die in der Separationsstufe 8 anfallende Flüssigfraktion 11 wird auch als Wasserzusatz 6 für die Vorbereitung des Fermentierungsgutes verwendet, so dass ein Frischwasserzusatz unnötig ist.

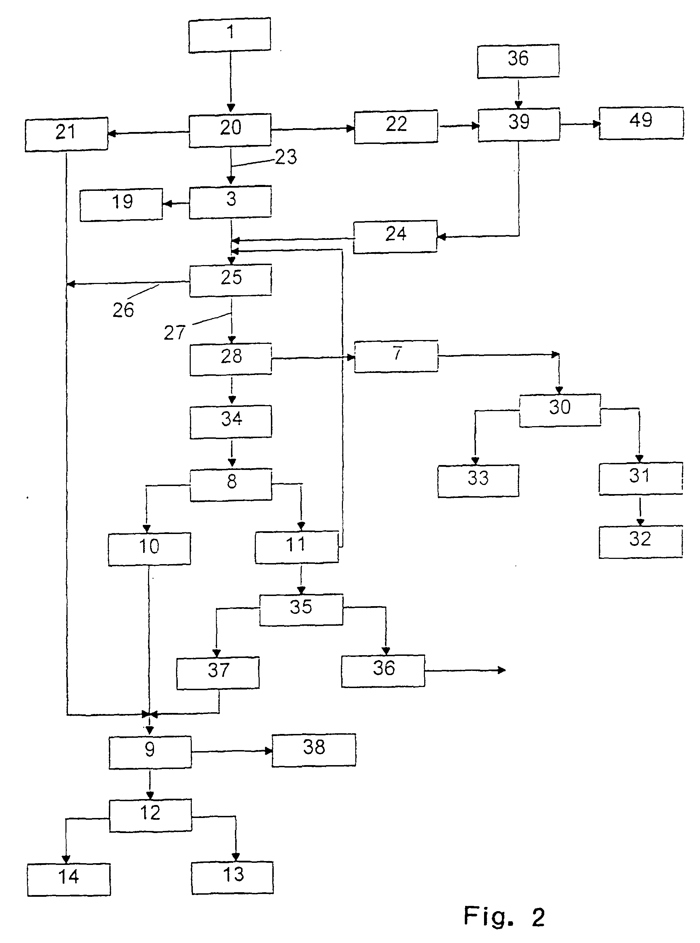

Figur 2 zeigt eine weiter ausgearbeitete Ausführung des Verfahrens. Die mit der vorbeschriebenen Ausführung des Verfahrens übereinstimmenden Elemente sind dabei mit den gleichen Bezugszeichen versehen. Die Prozentzahlen bei Mengenangaben beziehen sich auf die oben angegebene, als Beispiel angenommene Müllzusammensetzung.

Der Müll 1 wird aus der Anlieferungsstufe einem Brecher mit Trommelsieb 20 zugeführt. Der Müll wird darin in eine Grobfraktion 21 (untere Grenze der Teilchengrösse 100 - 300 mm, ca. 15-5 %), eine Feinfraktion 22 (obere Grenze der Teilchengrösse 15 - 40 mm, ca. 10-30 %) und den überwiegenden Rest 23 zerlegt, der ca. 70 % ausmacht. Die Grobfraktion 21 kann direkt der Trocknungsstufe 9 zugeführt werden.

Der Hauptstrom 23 wird der Metallabscheidungsstufe 3 zugeführt, wo Eisen und NE-Metalle 19 (3 - 4 %) abgetrennt werden. Der Rücklauf 24 aus der Behandlung der Feinfraktion 22 (siehe unten) wird dem Hauptstrom 23 zugesetzt und das Ganze einer Extrusionspresse 25 zugeführt. Die Extrusionspresse (s. CH-A-685 981) führt einen Aufschluss unter bis auf mindestens 700 Bar, in der Regel 1000 Bar steigendem Druck durch, wobei sich als Produkte eine relativ trockene brennbare Fraktion 26 und eine vergärbare Fraktion in Form einer Pulpe 27 ergibt.

Statt der Extrusionspresse 25 können auch andere Trennverfahren eingesetzt werden, z. B. manuelle oder mechanische Sortierung oder Siebsysteme, wie sie an sich bekannt sind. Auch Kombinationen dieser Verfahren untereinander und mit der Extrusionspresse kommen in Betracht.

Die brennbare Fraktion 26 kann wie die Grobfraktion 21 direkt der Trocknungsstufe 9 zugeführt werden. Die Pulpe 27 wird dem Fermenter 28, z. B. gemäss US-5,521,092, zugeführt. Gärfähiges Material muss mindestens 40 %, besser bis 70 % Wasser enthalten, wozu aus anderen Prozessschritten herrührendes Wasser (24, 11) zugesetzt wird. Der Fermenter wird erfindungsgemäss so geführt, dass eine erschöpfende Vergärung durchgeführt wird. Erfahrungsgemäss weist Material, das nicht mehr weiter vergärbar ist, eine OTS_{biol} von maximal 30 % auf. Das bei dem Abbau von mind. 70 % der OTS_{biol} entstehende Biogas 7 wird einem Blockheizkraftwerk 30 zugeführt. Die dabei erzeugte elektrische Energie 31 wird einerseits zum Betrieb der Anlage verwendet und der überwiegende Rest in das öffentliche Stromnetz 32 eingespeist. Die im Heizkraftwerk 30 entstehende Wärme 33 wird zur Trocknung in der Trockenstufe 9 eingesetzt. Bei der beispielhaft genannten Zusammensetzung des Siedlungsmülls mit ca. 20 % OTS_{biol} genügt die entstehende Wärme 33 für die Trocknung bis auf TS von mindestens 90 % in der Trocknungsstufe 9 aus, so dass für die Trocknung keine externen Energiequellen nötig sind.

Der dem Fermenter entnommene Gärrückstand 34 wird dem Separator 8 für die Auftrennung in die Festfraktion 10 und die Flüssigfraktion 11 zugeführt. Diese Separation erfolgt im wesentlichen durch Kompression des Gärrückstandes und Abtrennen des dabei austretenden Wassers, das mineralische und organische Bestandteile gelöst enthält.

Die Flüssigfraktion 11 wird einerseits dem Hauptstrom 23 vor dem Fermenter 28 zugesetzt, um den für die Vergärung nötigen Feuchtegrad zu erreichen. Die übrige Flüssigfraktion 11 wird einer Eindickung 35 unterworfen. Diese Eindickung geschieht durch Erwärmung unter verringertem Druck, z. B. bei Temperaturen bis zu 80° C und einem Druck von 1/2 Bar. Um zu vermeiden, dass Ammoniak in wesentlichem Umfang freigesetzt wird und ins Kondensat 36 übergeht, wird der pH-Wert der Flüssigfraktion 11 vor der Eindickung auf neutral bis schwach sauer (pH 5 - 6) eingestellt, z. B. durch Zusatz von Schwefelsäure. Ein zu saurer pH-Wert muss ebenfalls vermieden werden, um das Entstehen freier flüchtiger organischer Säuren (Aminosäuren) zu vermeiden.

Bei der Eindickung 35 entsteht besagtes Kondensat 36, das unter diesen Bedingungen Wasser mit sehr geringen Anteilen anderer Stoffe ist. Es kann einmal, wie noch dargestellt wird, im Prozess bei der Waschung der Feinfraktion 22 eingesetzt werden, oder auch in eine Kläranlage abgelassen werden.

Das Konzentrat 37 wird auf die trockenen Fraktionen in der Trockenstufe 9 aufgerieselt. Durch den Trocknungsvorgang wird das restliche, im Konzentrat 37 enthaltene Wasser in Dampf überführt und zusammen mit der Abluft, gegebenenfalls nach Filterung 38 zur Vermeidung von Geruchsbelästigungen in die Umgebung abgegeben.

Das getrocknete Material aus der Trockenstufe 9 wird noch der Feinsiebung 12 unterworfen, und die dabei entstehende Grob- 14 bzw. Feinfraktion 13 der thermischen Verwertung bzw., soweit möglich, einer industriellen Verwertung zugeführt. Generell wird mit vorliegender Erfindung ein trockenes Produkt erhalten, das von krümeliger Konsistenz ist und direkt Siebvorrichtungen und/oder Sichtern zugeführt werden kann. Z. B. sind in diesem Material Plastik- und Glasteile weitgehend von anhaftendem Schmutz befreit. U. a. ist es möglich, Plastikteile und andere brennbare Materialien (Papier, Holz, Kunststoffolien) mit nur noch geringen Verunreinigungen abzutrennen. Solche Gemische sind als *"fluff" bekannt und können als Brennstoff dienen.*

Die die Trockenstufe verlassenden Produkte enthalten einen Trockensubstanzanteil von mindestens 90 %, bevorzugt von mindestens 95 %.

Die Feinfraktion 22 des Ausgangsmülls 1, die in der bekannten Technik als Problemmüll galt, wird erfindungsgemäss in einer Wascheinheit 39 von anhaftenden Bestandteilen gereinigt: Die Feinfraktion 22 besteht im wesentlichen aus inertem Material, das an sich unproblematisch zu entsorgen wäre (Glas, Steine, Sand usw.) und allein wegen anhaftender, insbesondere organischer Bestandteile ein entsorgungstechnisches Problem darstellt: Wegen dieser organischen Bestandteile würde diese Fraktion z. B. auf einer Deponie anfangen, sich zu zersetzen und u.a. Deponiegase zu entwickeln. Kommende gesetzliche Regelungen setzen daher dem Anteil organischer Substanz (OTS) strenge Grenzen.

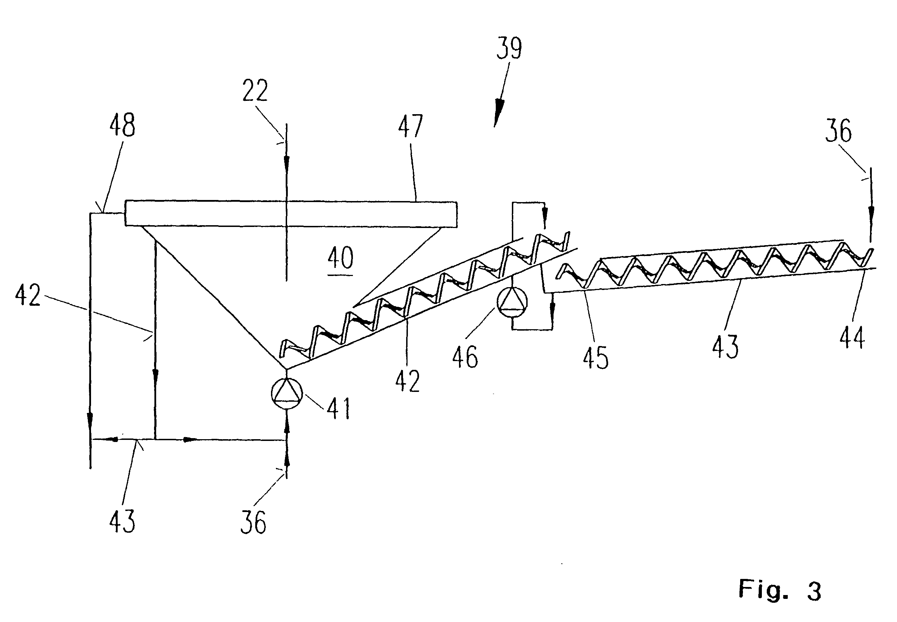

Der Erfindung gemäss kann die Feinfraktion 22 in einer Wascheinheit 39 wie in Figur 3 schematisch dargestellt so gereinigt werden, dass der OTS-Anteil (gemessen als Glühverlust) maximal 5 % beträgt.

Die Feinfraktion 22 wird zunächst einem Hydrosichter 40 zugeführt. Am Fusse des Hydrosichterkegels wird die Waschflüssigkeit durch eine Pumpe 41 eingeleitet. Die Waschflüssigkeit besteht zum einen aus dem Kondensat 36 und dem unterhalb der Oberfläche entnommenen und im Kreis geführten Betriebswasser 42. Da sich diese Flüssigkeit 42 mit der Zeit mit gelösten Stoffen anreichert, muss ein Teil 43 abgeführt und durch das im wesentlichen saubere Kondensat 36 ersetzt werden. Ein weiterer Zufluss an belastetem Wasser erfolgt über die Waschspiralen 42 und 43. Als solche können die gängigen Förderspiralen dienen (s. a. US-5,434,080). Die Waschspirale 42 entnimmt das am Boden abgelagerte Material und fördert es durch Drehung der Spirale nach oben, wo es in eine zweite Waschspirale 43 gelangt, die in einem flacheren Winkel angeordnet ist. Am Austragsende 44 der Waschspirale 43 wird Kondensatwasser 36 zugeführt, das sich dann im Gegenstrom zum Fördergut durch die Spirale 43 bewegt und dabei am Inertgut haftendes Material zurückschwemmt. Am Zufuhrende 45 wird das Waschwasser entnommen und über Pumpe 46 am Ausgang der ersten Waschspirale 42 eingeleitet. Das in der Waschspirale 42 zurückfliessende, bereits belastete Waschwasser bewirkt eine Vorreinigung des in der Spirale 42 geförderten Materials.

Zusammen mit dem abgetrennten Betriebswasseranteil 43 wird auch der an der Oberfläche von der Rakeleinrichtung 47 entnommene Anteil spezifisch leichten Materials 48 als Rücklauf 24 zurück in die Behandlung des Hauptstroms 23 des Siedlungsmülles geführt.

Das an der Spirale 43 austretende Material 49 ist feinkörnig, inert und hinreichend gesäubert, um mit geringen Problemen und geringen Kosten entsorgt werden zu können.

Insgesamt erlaubt es das Verfahren, eine bisher unerreichte Massenreduktion von Siedlungsmüll insbesondere durch Entzug von Wasser und OTS durchzuführen. Daneben werden auch Fraktionen erzeugt, die einer industriellen Verwertung zugeführt werden können oder eine geringere Umweltgefährdung darstellen und daher problemlos und mit geringeren Kosten als anhin endgültig entsorgbar sind. Eine Anlage zur Durchführung des Verfahrens kann sich aus Elementen zusammensetzen, die für sich bereits bekannt sind und daher nicht im Detail dargestellt zu werden brauchen. Entsprechend ist es dem Fachmann möglich, unter Einhaltung des erfinderischen Gedankens eine Vielzahl, von den Beispielen abweichende Konfigurationen einer Müllverarbeitungsanlage zu projektieren, ohne den Schutzbereich der Erfindung zu verlassen.

## Patentansprüche

1. Biologisch-thermisches Verfahren zur Behandlung von Müll, in dem:
• der Müll wenigstens in eine Feinfraktion mit Teilchen, deren Grössenobergrenze im Bereich zwischen 15 und 40 mm gewählt ist, und einen gröberen Anteil aufgetrennt wird,
• ein wesentlicher, vergärbarer Anteil (27) im gröberen Anteil des Mülls (1) einer anaeroben Vergärung (5; 28) unterworfen wird
• der so erhaltene Gärrückstand (34) getrocknet wird, wobei wenigstens eine mechanische Abtrennung (8) eines Flüssiganteils (11) vom Gärrückstand (34) vorgenommen wird,
• der Flüssiganteil (11) bis auf einen Trockensubstanzanteil von mindestens 35 % durch Verdampfen von Wasser eingedickt wird (35),
• die Feinfraktion (22) des Mülls (1), einer Wascheinheit (39) zugeführt wird, die einen Hydrosichter (40) mit mindestens einer nachfolgenden Waschspirale (42, 43) aufweist,
• mittels der Waschspirale (42) die spezifisch schwereren Anteile, die sich am Boden des Hydrosichters (40) absetzen, abtransportiert werden,
• am Austragsende der Waschspirale (42, 43) Waschflüssigkeit (36) aufgegeben wird,
• diese im Gegenstrom zur Förderrichtung der Waschspirale (42, 43) die Spirale (42, 43) durchläuft,
um an den Müllteilen anhaftende Stoffe in den Hydrosichter zurückzuschwemmen, wobei das beim Eindicken (35) entstehende Kondensat (36) als Waschflüssigkeit verwendet wird.

2. Verfahren gemäss Anspruch 1, **dadurch gekennzeichnet, dass** die Trocknung des Gärrückstandes ohne Zwischenschaltung einer Kompostierung erfolgt.

3. Verfahren gemäss einem der Ansprüche 1 bis 2, **dadurch gekennzeichnet, dass** ein Trockensubstanzanteil bei der Trocknung des Gärrückstandes von mindestens 90 % erreicht ist.

4. Verfahren gemäss einem der Ansprüche 1 bis 3, **dadurch gekennzeichnet, dass** die Trocknung bis zu einem Trockensubstanzanteil von mindestens 95 Gew.-% geführt wird.

5. Verfahren gemäss einem der Ansprüche 1 bis 4, **dadurch gekennzeichnet, dass** das getrocknete Material einer Siebung und/oder Sichtung (12) unterzogen wird, um eine Trennung in Fraktionen (13, 14) verschiedener Korngrösse, verschiedener Materialien und/oder verschiedenen spezifischen Gewichts oder Masse zu erhalten.

6. Verfahren gemäss einem der Ansprüche 1 bis 5, **dadurch gekennzeichnet, dass** der Gärrückstand (34) einen Anteil an biologisch abbaubarer Trockensubstanz von maximal 30 Gew.-% des vor der Vergärung vorhandenen Anteils aufweist.

7. Verfahren gemäss einem der Ansprüche 1 bis 6, **dadurch gekennzeichnet, dass** ein durch Vorsortierung erhaltener Teil mit den vergärbaren Anteilen oder die Gesamtmenge des Mülls (1) einer Extrusionspresse (25) zugeführt wird, um eine Separierung in einen Festkörperanteil (26) und eine Pulpe (27) durchzuführen, wobei die Pulpe im wesentlichen den ganzen biologisch abbaubaren organischen Substanzanteil enthält und der anaeroben Vergärung (5; 28) unterworfen wird und wobei die Extrusionspresse mit einem Enddruck von mindestens 700 bar arbeitet.

8. Verfahren gemäss einem der Ansprüche 1 bis 7, **dadurch gekennzeichnet, dass** das bei der anaeroben Vergärung (5; 28) entstehende Biogas (7) verbrannt wird, bevorzugt in einem Blockheizkraftwerk (30) unter Erzeugung von elektrischer Energie, und der für die Trocknung (9) nötige Energiebedarf allein von der so gewonnenen thermischen (33) und/oder elektrischen (31) Energie gedeckt wird.

9. Verfahren gemäss Anspruch 8, **dadurch gekennzeichnet, dass** die durch die Verbrennung des Biogases (7) erhältliche Energie für die Trocknung der Gesamtmenge Müll (1) im wesentlichen durch Verdampfen und/oder forciertes Verdunsten des Wassergehalts genügt.

10. Verfahren gemäss einem der Ansprüche 1 bis 9, **dadurch gekennzeichnet, dass** der Flüssiganteil (11) vor der Eindickung (35) auf einen neutralen bis leicht sauren pH-Wert eingestellt wird, insbesondere einen pH im Bereich von 5 bis 6, um die Bildung insbesondere gasförmigen Ammoniaks während des Eindickens (35) zu unterdrücken.

11. Verfahren gemäss einem der Ansprüche 1 bis 10, **dadurch gekennzeichnet, dass** das beim Waschprozess der Feinfraktion (22) in der Wascheinheit (39) anfallende belastete Wasser zum Befeuchten des vergärbaren Müllanteils (23) verwendet wird, um einen Feuchtigkeitsanteil einzustellen, der für die Vergärung nötig ist.

12. Anlage zur Durchführung des Verfahrens gemäss einem der Ansprüche 1 bis 11, **dadurch gekennzeichnet, dass** ein Fermenter (5; 28) für die Durchführung einer anaeroben Vergärung mit Mitteln, die eine Vermischung von Material verschiedenen Vergärungsgrades unterdrücken, vorhanden ist, so dass durch Einstellung von Betriebsparametern wie Verweilzeit, Füllhöhe der dem Fermenter entnommene Gärrückstand (34) nicht mehr weiter biologisch abbaubar, insbesondere nicht mehr vergärbar ist, und dass dem Fermenter eine Trockenvorrichtung (9) direkt oder indirekt nachgeschaltet ist, um mindestens den Gärrückstand (34) bis auf einen Trockensubstratanteil von mindestens 90 % zu trocknen und ein Produkt zu erhalten, das keine biologische Zersetzungsaktivität mehr aufweist, und dadurch, dass ein Hydrosichter (39) mit mindestens einer anschliessenden Waschspirale (42, 43) vorhanden ist, dem eine feinkörnige Fraktion von Müll zuführbar ist, und einer Zufuhreinrichtung für eine Waschflüssigkeit aus der Verdickungsstufe, so dass die Waschspirale (42, 43) im Gegenstrom von Waschwasser (36) durchströmbar ist, das im wesentlichen aus der Eindickung (35) stammt.

13. Anlage gemäss Anspruch 12, **dadurch gekennzeichnet, dass** mindestens zwei und bevorzugt genau zwei hintereinander angeordnete Wasschspiralen (42, 43) vorhanden sind.

14. Anlage gemäss einem der Ansprüche 12 bis 13, **dadurch gekennzeichnet, dass** mindestens die erste, das zu waschende Material aus dem Hydrosichter (40) fördernde Waschspirale (42) ausgehend von ihrem Austragsende wenigstens zu einem wesentlichen Teil der Gesamtlänge in einer Umhüllung angeordnet ist, so dass in diesem Teil der Waschspirale das zu waschende Material im wesentlichen nur mit dem Waschwasser (36) in Kontakt kommt.

15. Anlage gemäss einem der Ansprüche 12 bis 14, **dadurch gekennzeichnet, dass** der Trockenvorrichtung (9) mindestens eine Siebvorrichtung (12) und/oder ein Sichter nachgeschaltet ist, durch die das trockene, biologisch inaktive Material in Fraktionen nach spezifischem Gewicht und/oder Teilchengrösse trennbar ist.

16. Anlage gemäss einem der Ansprüche 12 bis 15, **dadurch gekennzeichnet, dass** der Trockenvorrichtung (9) eine Siebvorrichtung (12) nachgeschaltet ist, mittels der das trockene, biologisch inaktive Material in eine feinkörnige Fraktion (13) und eine grobkörnige Fraktion (14) trennbar ist, wobei die Teilchenobergrenze der feinkörnigen Fraktion im Bereich von 2 bis 10 mm gewählt ist, um diese Fraktion der industriellen Verwertung zuführen zu können.

## Claims

1. Biological-thermal process for the treatment of refuse, in which:
• the refuse is at least divided into a fine fraction composed of particles whose upper size limit is selected between 15 and 40 mm and a coarser fraction (27),
• a substantial fermentable portion (27) of the coarser fraction of the refuse (1) is subjected to an anaerobic fermentation (5; 28),
• the fermentation residue (34) thus obtained is desiccated while at least a mechanical separation (8) of a liquid fraction (11) from the fermentation residue (34) is effected,
• the liquid fraction (11) is concentrated (35) by evaporation of water until a dry matter content of at least 35 % results,
• the fine fraction (22) of the refuse (1) is supplied to a washing unit (39) including a hydrosifter (40) followed by at least one washing screw (42, 43),
• the specifically heavier components depositing on the bottom of the hydrosifter (40) are eliminated by the washing screw (42),
• a washing liquid (36) is supplied at the delivery end of the washing screw (42, 43),
• the washing liquid runs through the washing screw (42, 43) countercurrently to the conveying direction of the screw (42, 43),
in order to flush back matter that is adhering to the waste particles while the condensate (36) produced in the concentration (35) serves as the washing liquid.

2. Process according to claim 1, **characterised in that** the desiccation of the fermentation residue is performed without intermediate composting.

3. Process according to one of claims 1 to 2, **characterised in that** a dry matter content of at least 90 % is attained in the desiccation of the fermentation residue.

4. Process according to one of claims 1 to 3, **characterised in that** the desiccation is continued until a dry matter content of at least 95 % by weight is attained.

5. Process according to one of claims 1 to 4, **characterised in that** the dried material is submitted to a screening and/or sifting (12) in order to obtain a separation into fractions (13, 14) of different particle sizes, different materials and/or different specific weight or mass.

6. Process according to one of claims 1 to 5, **characterised in that** the fermentation residue (34) has a biologically degradable dry matter content of at most 30 % by weight of the amount present prior to the fermentation.

7. Process according to one of claims 1 to 6, **characterised in that** a portion of the refuse containing the fermentable matter that is obtained by pre-sorting or the refuse (1) in its entirety is supplied to an extrusion press (25) in order to perform a separation into a solid matter fraction (26) and a pulp (27), the pulp essentially containing the entire content of biologically degradable organic matter and being subjected to the anaerobic fermentation (5; 28), and the extrusion press operating at a final pressure of at least 700 bar.

8. Process according to one of claims 1 to 7, **characterised in that** the biogas (7) formed during the anaerobic fermentation (5; 28) is burned, preferably in a block type thermal power station (30), while producing electric energy, and that the energy required for the desiccation (9) is entirely supplied by the thermal (33) and/or electric (31) energy thus obtained.

9. Process according to claim 8, **characterised in that** the energy produced by the combustion of the biogas (7) is sufficient for the desiccation of the entire refuse (1) essentially by vaporisation and/or forced evaporation of the water content.

10. Process according to one of claims 1 to 9, **characterised in that** the pH of the liquid fraction (11) is adjusted prior to the concentration (35) to a neutral or slightly acidic value, in particular to a value comprised between 5 and 6, in order to suppress especially the formation of gaseous ammonia during the concentration step (35) .

11. Process according to one of claims 1 to 10, **characterised in that** the polluted water resulting in the process of washing the fine fraction (22) in the washing unit (39) is used for humidifying the fermentable portion (23) of the refuse in order to adjust the moisture content required for the fermentation.

12. Installation for carrying out the process according to one of claims 1 to 11, **characterised in that** a fermenter (5; 28) is provided for carrying out an anaerobic fermentation which includes means for preventing a mixing of materials of different fermentation degrees, so that by an adjustment of process parameters such as the dwelling time and the filling height, the fermentation residue (34) recovered from the fermenter is not further biologically degradable, particularly not further fermentable, and **in that** the fermenter is directly or indirectly followed by a drying device (9) for drying at least the fermentation residue (34) to a dry substrate content of at least 90 % to obtain a product exhibiting no more biological decomposition activity, and **in that** a hydrosifter (39) followed by at least one washing screw (42, 43) is provided which is capable of being supplied with a fine-grained fraction of the refuse, as well as a device for supplying a washing liquid from the concentration stage such that the washing screw (42, 43) can be countercurrently flushed with washing water (36) that is essentially obtained in the concentration step (35).

13. Installation according to claim 12, **characterised in that** at least two and preferably exactly two consecutively arranged washing screws (42, 43) are provided.

14. Installation according to one of claims 12 to 13, **characterised in that** at least the first washing screw (42) that serves for extracting the material to be washed from the hydrosifter (40) is enclosed in an envelope extending from its delivery end over at least a substantial part of its total length such that the material to be washed is essentially only in contact with the washing water (36) in this portion of the washing screw.

15. Installation according to one of claims 12 to 14, **characterised in that** the drying device (9) is followed by at least one screening device (12) and/or a sifter allowing the separation of the dry, biologically inactive material into fractions according to specific weight and/or particle size.

16. Installation according to one of claims 12 to 15, **characterised in that** the drying device (9) is followed by a screening device (12) that allows the separation of the dry, biologically inactive material into a fine-grained fraction (13) and a coarse-grained fraction (14), the upper limit of the particle size of the fine-grained fraction being selected within the range of 2 to 10 mm in order to allow industrial recycling of this fraction.

## Revendications

1. Procédé bio-thermique de traitement de déchets, dans lequel:
• les déchets sont séparés du moins en une fraction fine composée de particules dont la limite supérieure de la taille est choisie entre 15 et 40 mm et une fraction (27) plus grossière,
• une partie (27) substantielle fermentescible de la fraction plus grossière des déchets (1) est soumise à une fermentation (5; 28) anaérobie,
• le résidu (34) de la fermentation ainsi obtenu est séché alors que du moins une séparation mécanique (8) d'une fraction liquide (11) du résidu (34) de la fermentation est effectuée,
• la fraction liquide (11) est concentrée (35) jusqu'à une teneur en matière sèche de 35 % au moins par évaporation d'eau,
• la fraction fine (22) des déchets (1) est amenée à une unité de lavage (39) comprenant un hydroséparateur (40) suivi d'au moins une spirale de lavage (42, 43),
• les composantes à haut poids spécifique se déposant au fond de l'hydroséparateur (40) sont enlevées par la spirale de lavage (42),
• un liquide de lavage (36) est amené à l'extrémité de décharge de la spirale de lavage (42, 43),
• celui-ci parcourt la spirale (42, 43) contre la direction de transport de la spirale de lavage (42, 43),
afin de rincer en arrière vers l'hydroséparateur les substances adhérant aux particules des déchets, le condensat (36) produit dans la concentration (35) étant utilisé comme liquide de lavage.

2. Procédé selon la revendication 1, **caractérisé en ce que** le séchage du résidu de la fermentation est effectué sans compostage intermédiaire.

3. Procédé selon l'une des revendications 1 à 2, **caractérisé en ce qu'**une teneur en matière sèche de 90 % au moins est atteinte dans le séchage du résidu de la fermentation.

4. Procédé selon l'une des revendications 1 à 3, **caractérisé en ce que** le séchage est mené jusqu'à une teneur en matière sèche de 95 % en poids au moins.

5. Procédé selon l'une des revendications 1 à 4, **caractérisé en ce que** la matière séchée est soumise à un tamisage et/ou une séparation (12) afin d'obtenir une séparation en fractions (13, 14) de différentes dimensions, de différents matériaux et/ou de différents poids spécifiques ou masses.

6. Procédé selon l'une des revendications 1 à 5, **caractérisé en ce que** le résidu de la fermentation (34) présente un teneur en matière sèche biodégradable de 30 % en poids au plus de la teneur avant la fermentation.

7. Procédé selon l'une des revendications 1 à 6, **caractérisé en ce qu'**une partie obtenue par un triage préliminaire, composée des composantes fermentescibles, ou la totalité des déchets (1) est amenée à une presse à extrusion (25) afin d'effectuer une séparation en une fraction solide (26) et une pulpe (27), ladite pulpe contenant essentiellement tout le contenu en matière organique biodégradable et étant soumise à la fermentation anaérobie (5; 28), et la presse à extrusion travaillant à une pression finale de 700 bar au moins.

8. Procédé selon l'une des revendications 1 à 7, **caractérisé en ce que** le biogaz (7) produit pendant la fermentation anaérobie (5; 28) est brûlé, préférablement dans une centrale thermique de type bloc (30) en produisant de l'énergie électrique, et que la consommation d'énergie du séchage (9) est entièrement couverte par l'énergie thermique (33) et/ou électrique (31) ainsi obtenue.

9. Procédé selon la revendication 8, **caractérisé en ce que** l'énergie obtenue dans la combustion du biogaz (7) est suffisante pour le séchage de la totalité des déchets (1) essentiellement par vaporisation et/ou évaporation forcée de la teneur en eau.

10. Procédé selon l'une des revendications 1 à 9, **caractérisé en ce que** le pH de la fraction liquide (11) est ajusté à une valeur neutre à légèrement acide avant la concentration (35), plus particulièrement à un pH dans le domaine de 5 à 6, afin d'empêcher la formation particulièrement d'ammoniaque gazeux pendant la concentration (35).

11. Procédé selon l'une des revendications 1 à 10, **caractérisé en ce que** l'eau chargée résultant du processus de lavage de la fraction fine (22) dans l'unité de lavage (39) est utilisée pour humidifier la fraction fermentescible (23) des déchets afin d'ajuster la teneur en humidité requise pour la fermentation.

12. Installation pour la mise en oeuvre du procédé selon l'une des revendications 1 à 11, **caractérisée en ce qu'**un fermenteur (5; 28) est pourvu pour la mise en oeuvre d'une fermentation anaérobie, avec des moyens permettant d'empêcher un mélange de matières de différents degrés de fermentation, de sorte que grâce à l'ajustement de paramètres de service tels que le temps de séjour et le niveau de remplissage, le résidu de la fermentation (34) prélevé du fermenteur n'est plus biodégradable davantage, particulièrement plus fermentescible, et que le fermenteur est directement ou indirectement suivi d'un dispositif de séchage (9) afin de sécher du moins le résidu de la fermentation (34) jusqu'à une teneur en substrat sec de 90 % au moins et d'obtenir un produit qui ne présente plus aucune activité de décomposition biologique, et **en ce qu'**un hydroséparateur (39) avec au moins une spirale de lavage (42, 43) suivante est pourvu, auquel une fraction des déchets à grains fins peut être amenée, et un dispositif d'alimentation d'un liquide de lavage provenant de l'étage de concentration, permettant l'écoulement dans la spirale de lavage (42, 43) d'un contre-courant d'eau de lavage (36) provenant essentiellement de la concentration (35).

13. Installation selon la revendication 12, **caractérisée en ce qu'**au moins deux et préférablement exactement deux spirales de lavage (42, 43) successives sont pourvues.

14. Installation selon l'une des revendications 12 à 13, **caractérisée en ce que** du moins la première spirale de lavage (42) transportant la matière à laver hors de l'hydroséparateur (40) est contenue dans une enveloppe s'étendant à partir de son extrémité de décharge du moins sur une partie substantielle de sa longueur entière, de sorte que dans cette partie de la spirale de lavage, la matière à laver n'entre en contact qu'avec l'eau de lavage (36) essentiellement.

15. Installation selon l'une des revendications 12 à 14, **caractérisée en ce que** le dispositif de séchage (9) est suivi d'un dispositif de tamisage (12) et/ou d'un séparateur au moins qui permet de séparer la matière sèche, biologiquement inactive en fractions selon le poids spécifique et/ou la taille des particules.

16. Installation selon l'une des revendications 12 à 15, **caractérisée en ce que** le dispositif de séchage (9) est suivi d'un dispositif de tamisage (12) permettant de séparer la matière sèche, biologiquement inactive en une fraction à grains fins (13) et une fraction à gros grains (14), la limite supérieure de la taille des particules de la fraction à grains fins étant choisie dans le domaine de 2 à 10 mm afin de pouvoir amener cette fraction au recyclage industriel.
